(19) Europäisches Patentamt
European Patent Office
Office européen des brevets

(11) Publication number: 0 371 601 B1

(12) EUROPEAN PATENT SPECIFICATION

(45) Date of publication of patent specification: 15.02.95

(51) Int. Cl.⁶: **C11B 1/10**, A23D 7/00, A23L 1/035, A23J 7/00, A21D 2/36

(21) Application number: 89310883.7

(22) Date of filing: 23.10.89

(54) Surfactant.

(30) Priority: 29.10.88 GB 8825371

(43) Date of publication of application:
06.06.90 Bulletin 90/23

(45) Publication of the grant of the patent:
15.02.95 Bulletin 95/07

(84) Designated Contracting States:
AT BE CH DE ES FR GB GR IT LI LU NL SE

(56) References cited:
EP-A- 0 021 228
WO-A-88/08253
US-A- 2 636 888
US-A- 4 053 492

(73) Proprietor: CADBURY SCHWEPPES PLC
Bournville
Birmingham, B30 2LU (GB)

(72) Inventor: Evans, Roger
1, Chelwood Road
Earley
Reading
Berkshire
RG6 2OG (GB)
Inventor: Jee, Michael Henry
72 Underwood Road
Southcote
Reading
Berkshire
RG3 3NF (GB)
Inventor: Smith, Ian Humphrey
Woodlands
Flowers Hill
Pangbourne
Reading
Berkshire RG8 7BD (GB)
Inventor: Sanders, Nigel Hugh
2, Water Road
Reading
Berkshire RG3 2NN (GB)

(74) Representative: Pearce, Anthony Richmond et al
MARKS & CLERK,
Alpha Tower,
Suffolk Street Queensway
Birmingham B1 1TT (GB)

EP 0 371 601 B1

**EP 0 371 601 B1**

**Description**

This invention relates to a surfactant which is useful in the food industry, for example in the manufacture of bread or margarine, and in the agricultural, chemical, cosmetic, pharmaceutical, building, textile and tanning industries. The present invention particularly relates to surfactants and methods for the preparation thereof which are modifications of those described in WO-A-88/08253 (PCT GB88/00321) and New Zealand Patent Application No. 224382. In such applications, there are described viscosity-reducing agents derived by solvent extraction of oats. In one example, oats are extracted using a permitted polar solvent, (eg an aliphatic alcohol such as ethanol or isopropanol) to produce a polar solvent extract, and an oil is separated from the polar solvent extract, the oil being the viscosity-reducing agent. In a preferred embodiment of such method, the polar solvent extract is extracted with a different polar solvent such as methanol, followed by evaporation of the latter to yield a polyglycerol-polyricinoleate-type emulsifier (PGPR-type emulsifier). In another method disclosed in the above-mentioned Patent Applications, oats are extracted using a permitted non-polar organic solvent (eg hexane), and then re-extracted using a permitted aliphatic alcohol, most preferably ethanol or isopropanol to produce a polar solvent extract. Oil is separated from said polar solvent extract, preferably by evaporation of part of the solvent from the polar solvent extract until the oil separates from the latter. The oil is the viscosity-reducing agent.

Processes for the treatment of comminuted oats for the purpose of preparing oat bran, oat flour and oat oil are disclosed in GB-A-1527101 and GB-A-1552012. In such publications, the recovery of an oil fraction is disclosed by extracting comminuted oats with a solvent such as hexane, although the use of alcohols having one to four carbon atoms is disclosed as a possibility, and recovering the oil from the solvent extract by complete removal of the hexane. It is also disclosed in such publications that the oil obtained may be turbid and that such oil may be clarified by mixing with isopropanol, agitating and then removing any solid material, eg by centrifuging. It is also disclosed in such publications that the solids removed on centrifuging are believed to contain a significant amount of phospholipids and may be suitable for use, for example, as emulsifiers. However, no indication is given as to the intended field of use of such emulsifiers. Indeed, if hexane is used to extract the oats and the resulting turbid oil is centrifuged and degummed, then we have found that neither the remaining oil nor the gum are particularly active as emulsifiers.

US-A-4053492 also discloses a process for the extraction of oil from comminuted oats, such process involving extracting with 2-propanol, separating the resultant solution containing 2-propanol and extracted oil from the de-oiled oats, and separating the oil from the 2-propanol.

US-A-2636888 discloses a method of making an oat extract useful for addition to food products as an emulsifier, said method involving extraction of rolled oats with hexane to produce a crude oat oil, contacting the oat oil with an ether-methanol solvent, allowing the mixture to separate into upper and lower layers, removing the ether-methanol solvent from the upper layer, adding acetone to the ether-methanol extract with cooling and then separating the acetone-insoluble product from the acetone.

An object of the present invention is to provide a general purpose surfactant. It is also an object of the invention to provide a surfactant which is water-soluble.

According to the present invention, there is provided a process for the preparation of a surfactant comprising the step of extracting oats using an aliphatic alcohol to produce an alcohol extract characterised in that (a) the aliphatic alcohol is ethanol or propanol, (b) the alcohol extract is extracted with methanol to produce a methanol extract, (c) the methanol extract is extracted with acetone, and (d) the acetone-insoluble material is recovered.

The extraction with acetone is preferably effected by repeatedly washing with methanol extract with acetone.

The acetone-insoluble material after recovery is preferably dried, eg in a vacuum oven.

The surfactant produced by the process according to the present invention is useful as an emulsifying agent favouring water-in-oil (eg vegetable oil, mineral oil such as a hydrocarbon oil, or animal oil) emulsions when pre-dissolved in the oil phase, and oil-in-water emulsions when pre-dissolved in the aqueous phase. Thus, the present invention also resides in the use of the surfactant produced by the process of the present invention as an emulsifying agent and/or stabilizer in water-in-oil emulsions and oil-in-water emulsions.

The surfactant prepared by the process of the present invention is also useful in bread making for enhancing the loaf volume and increasing the openness of the crumb grain in bread. Accordingly, the present invention also resides in the use of such a surfactant in bread making.

The surfactant prepared by the process according to the present invention also aids the formation and stabilisation of aqueous foams. Thus, the present invention also resides in the use of such a surfactant in the formation and stabilization of aqueous foams.

The surfactant prepared by the process according to the present invention also gives rise to small water droplet sizes in margarine and is effective as an anti-spattering agent in margarine. Thus, the present invention also resides in the use of the emulsifier prepared by the process according to the present invention in margarine.

The ability of surfactants to aid the emulsification of oil in water or water in oil, and to stabilise the emulsion is an important property in many products. In the context of emulsion formation, surfactants are frequently referred to as emulsifiers but this term has become a common name, particularly in the food industry, even when the surfactant is not being used specifically as an emulsifier. The emulsifying properties of surfactants arise from the reduction in interfacial tension between the water and the oil phase which takes places when the surfactant adsorbs at the interface. This diminishes the mechanical energy required to form the large interfacial area in the emulsion. The adsorbed layer of surfactant surrounding the droplets of the dispersed phase can prevent coalescence by forming a cohesive interfacial film and also by introducing steric and electrostatic repulsion forces. Surfactants exhibit different solubilities in solvents based upon their structure, and the balance between the hydrophilic (polar) and the lipophilic (apolar) parts of the molecule which is known as the HLB. The more polar, hydrophilic, surfactants tend to be more soluble in water and promote the formation of oil-in-water emulsions, whereas the less polar, lipophilic, surfactants tend to be more soluble in oil and promote water-in-oil emulsions.

The acetone-insoluble material (pre-dissolved in water) gives good emulsification of oil in water.

The functionality of food emulsifiers incorporated into bread recipes extend beyond their ability to emulsify oil in water or water in oil. The terms used to describe some of the more complex functions of these emulsifiers in bread making include, for example, "softener", "dough conditioner", "starch complexing agent", "bread improver", "antistaling agent", "protein complexing agent" and "volume improver", see Hughes, E.J. (1975) **Baking Industries Journal**, February 22.

Some of these terms such as "softener", "antistaling agent" and "starch complexing agent" can all describe the same underlying function of the emulsifier which, in the case, refers to the complex formed by the penetration of the amylose helix in starch by an emulsifier molecule. Similarly, the terms "protein complexing agent", "bread improver" and "volume improver" can be linked to the ability of emulsifiers to interact with the proteins particularly glutenin and gliadin in the wheat flour gluten.

The unique ability of wheat flour in yeast-leavened products to retain gases, mainly carbon dioxide, produced during fermentation is impaired when the free lipids in the flour are removed by extraction with non-polar solvents such as petroleum ether, see Daftary et al (1968) **Food Technology, 22**,327. The property is restored when the polar lipid fraction, composed mainly of glycolipids, is added back to the flour. Glycolipids in the free polar lipids can be bound simultaneously to gliadin by hydrophilic bonds and to the glutenin by hydrophilic bonds, see Hosenay et al (1970) **Cereal Chemistry, 47**,135.

The surfactant produced according to the present invention is able to enhance loaf volume and increase the openness of the crumb grain in bread.

In simple air/water foam systems, the effect of surfactants is explained in terms of their ability to reduce the surface tension of water and form interfacial films by adsorption and molecular orientation at the interface. The acetone-insoluble material, which is water-soluble and reduces the surface tension of water, is a satisfactory foaming agent in aqueous solution.

Emulsifiers are used in margarine in order to create and stabilise a finely dispersed water-in-oil emulsion before partial crystallisation of the fat phase. This is desirable in order to improve texture, stability, shelf-like etc. and is necessary for all types of margarine. However, further functional properties are required in special margarines. One of these is the ability to minimise spattering during open-pan frying. Spattering is caused when water droplets in the melted fat coalesce and sink down to the surface of the hot frying pan. At this point they evaporate vigorously causing splashing of the molten fat outside the pan.

The acetone-insoluble material imparts excellent anti-spattering properties.

The present invention will now be described in further detail in the following Examples:-

**Example 1 (Preparation of IPA Extract of Oats)**

Rolled Jumbo oats (25 kg) were loosely packed into a glass column (9 inch diameter) and then continuously extracted for 40 minutes with 60 litres of isopropanol (IPA) heated to 70°C. The column was allowed to drain and the extraction procedure repeated a further two times using a fresh charge of solvent each time. The isopropanol extracts were concentrated under vacuum to yield 1.6 kg of an oil.

**Example 2 (Preparation of IPA/MeOH Extract of Oats)**

The isopropanol extract of rolled Jumbo oats (1.6 kg), prepared as described in Example 1, was thoroughly mixed with 7.5 litres of methanol (MeOH). On standing the mixture separated into two layers. The methanolic upper layer was removed and the lower layer was then extracted a further two times with methanol (7.5 litres). The three methanol extracts were combined and the methanol removed under vacuum to yield 424 g of a viscous material. The material which did not extract into the methanol was mainly composed of triglycerides.

Example 3 (Preparation of Acetone-insoluble Fraction of IPA/MeOH Extract of Oats)

The methanol extract of the isopropanol extract of rolled oats (30 g) prepared as described in Example 2, was thoroughly mixed with acetone (250 ml). The solids were allowed to settle and the acetone washing was decanted from the solids. The extraction of the solids was repeated twice further with 250 ml of acetone and then twice with 50 ml of acetone yielding 7.95 g of acetone-insoluble solids after removal of the last traces of acetone under vacuum.

Example 4 (Emulsion Formation)

Mixtures of equal volumes (100ml) of either cyclohexane or corn oil (Sigma Chemical Co. Ltd.) and purified water (Rathburn Chemical Co. Ltd., HPLC grade) containing a total of 5% w/v emulsifier were prepared in stoppered 250 ml graduated cylinders. The emulsifier was dissolved either in the aqueous or the oil phase prior to mixing the two phases. Each cylinder with its contents was then cooled to 5 or 10°C and the contents shaken ten times. After a rest period of 5 min, the phase volumes of emulsion and separated aqueous and oil phases were recorded. The temperature was then raised by 5°C and the procedure repeated up to a temperature of 65°C.

The following emulsifiers were used in the above test with cyclohexane and water.
1. IPA/MeOH extract of oats (product of Example 2).
2. IPA extract of oats (product of Example 1).
3. Acetone-insoluble fraction of the IPA/MeOH extract of oats (product of Example 3).
4. Admul® WOL (polyglycerolpolyricinoleate).
5. SN (soyabean lecithin).
6. Acetone-insoluble fraction of SN.
7. YN(ammonium salts of phosphatidic acids), Cadbury Ltd.
8. SPS, sucrose palmitate stearate 15 (Serva, Feinbiochemica, Heidelberg). Palmitate 70%, stearate 30%, monoester 70%, di- + triester 30%, HLB ca. 15.
9. Epikuron® 145V, (Lucas Meyer, Gmbh & Co.), fractionated soya lecithin containing 51.6% phosphatidylcholine.
10. Epikuron® 170, fractionated soya lecithin containing 75.2% phosphatidylcholine.
11. Epikuron® 200, fractionated soya lecithin containing 51.5% phosphatidylcholine.

All of these were pre-dissolved at 10% in cyclohexane. The acetone-insoluble fraction of the IPA/MeOH extract of oats was initially pre-dissolved in the water and then subsequently in cyclohexane. The Epikuron® samples were also run twice, pre-dissolving each of them in the water and then in the cyclohexane. Experiments using corn oil were confined to the IPA/MeOH extract at 5% and also at 2.5% w/v in the total mixture; the emulsifier was pre-dissolved in the corn oil.

Results and discussion

The results of the tests enabled the behaviour of the emulsifiers to be grouped into three types; those promoting water-in-oil emulsions, those promoting oil-in-water emulsions and those having no or little emulsifiying capacity are summarised in Table 1.

Amongst the water-in-oil emulsion promoters is the IPA/MeOH extract of oats. This extract gave complete emulsification of the water in the cyclohexane with only a thin layer of the oil separating at higher temperatures. In the corn oil/water mixture, the IPA/MeOH extract showed excellent emulsifying capacity over the entire temperature range and this behaviour was also maintained when the concentration of the emulsifier in the mixture was reduced from 5 to 2.5%

The other promoters of water-in-oil emulsions include the acetone-insoluble fraction of the IPA/MeOH oat extract pre-dissolved in cyclohexane, Admul® WOL, YN and Epikuron® 200 (pre-dissolved in the water).

Of these, Admul® WOL showed the greatest emulsifying capacity, comparable with that of the IPA/MeOH oat extract. YN was almost as good as these two, but Epikuron® 200 and the acetone-insoluble fraction of the IPA/MeOH oat extract were both poor at low temperatures and improved at temperatures above 30°C and above 50°C, respectively.

The emulsifiers promoting oil-in-water emulsions include the acetone-insoluble fraction of the IPA/MeOH oat extract, SPS and the Epikuron® 145V and 170, all pre-dissolved in the water. All of these displayed good emulsifying capacity at higher temperatures. Generally the acetone-insoluble fraction of oat extract and SPS were better emulsifiers than the Epikuron® samples.

Finally the poor emulsifiers allowed almost complete separation of the water and oil phases at all temperatures and two of them, the IPA extract of oats and SN, gave an interfacial precipitate.

### Example 5 (Bread)

#### Procedure

Small loaves of bread were made incorporating various emulsifiers using the Chorleywood breadmaking process.

The following ingredients were weighed into a bowl.

1 kg Canadian Spring wheat flour (moisture content 14.6%)
18 g salt
25 g fresh bakers' yeast
7 g lard
100 mg ascorbic acid
10 g emulsifier.

These were tipped into a Z-mixer and mixed on slow speed for 100 s. Mixing was continued whilst 620 ml warm (32°C) water was added. The dough was scraped down from the sides and then developed in the Z-mixer on fast speed for 18 watt hours. The dough was removed and divided into 460 g dough pieces, each of which was put through a moulder. Initial proving was performed at 40°C for 10 min after which the pieces were remoulded and placed in a greased bread tin. A further proving for 48 min at 40°C was performed before the dough was baked in an oven at 232°C for 27-30 min. The bread was then removed from the tin and allowed to cool.

Four or five batches of three loaves were baked per day; the first and last were controls containing no added emulsifier and two or three different emulsifiers were used in the intermediate batches. These were as follows:-

1. IPA/MeOH extract of oats (product of Example 2).
2. IPA extract of oats (product of Example 1).
3. Acetone-insoluble fraction of the IPA/MeOH extract of oats (products of Example 3).
4. Artodan® SP 55 (Grinstead Products Ltd.) - sodium and calcium stearoyl-2-lactylates.
5. Dimodan® PV (Grinstead Products Ltd.) - distilled monoglycerides.
6. Panodan® 10V (Grinstead Products Ltd.) - diacetyl tartaric acid esters of monoglycerides.
7. Triodan® 55 (Grinstead Products Ltd.) - polyglycerol esters of fatty acids.

#### Test procedures

After cooling the loaves, measurements of loaf weight and volume (rapeseed displacement method) were made. In addition, one loaf from each batch was sliced and details of the internal crumb structure were recorded.

#### Results and discussion

The data on loaf size were used to determine the percentage increase in mean specific volume due to the presence of emulsifier. This was calculated as

$$\text{\% increase in loaf specific vol.}$$

$$= \left( \frac{\text{mean sp. vol. of loaves with emulsifier}}{\text{mean sp. vol. of control loaves}} - 1 \right) \times 100$$

where specific volume is defined as the volume per unit weight of the loaf. The results are listed in Table 2.

The oat extracts generally gave a significant increase in loaf specific volume. Of these, the IPA/MeOH extract gave the highest value of 9.4%. This value was approaching those produced from the best two commercial emulsifiers, Artodan® and Panodan®, at about 12-13%, and was better than those produced by Dimodan® and Triodan®.

In general, when the loaf specific volume was increased, there was a concomitant increase in the openness of the crumb texture.

Example 6 (Foam Formation)

Procedure

Foam tests were performed according to the method developed for proteins at the Leatherhead Food R.A. , see Poole et al (1984) J. Sci. Food Agric, 38,701. Samples of surfactant (1.25 g) were dissolved in 250 ml of purified water (Rathburn Chemical Co. Ltd., HPLC grade) using a magnetic stirrer. These solutions were whipped at maximum speed (200 rev min⁻¹) for 5 min in a Kenwood® Chef Model A901 mixer. Foams were transferred into either a 1 or 2 litre measuring cylinder, using a kitchen spatula if necessary, and the foam volume and liquid drainage were measured at 5 min intervals up to 30 min.

The following parameters were then calculated and plotted as a function of time.

$$\text{\% Foam expansion (FE)}$$

$$= \frac{\text{foam volume (ml)}}{\text{initial liquid volume (250 ml)}} \times 100$$

$$\text{\% Foam liquid stability (FLS)}$$

$$= \frac{\text{volume of liquid (ml) retained in foam after 30 min}}{\text{volume of liquid prior to whipping (250 ml)}} \times 100$$

Tests were performed in duplicate and the results averaged.

The following water-soluble samples were used in this test.

1. Acetone-insoluble fraction of the IPA/MeOH extract of oats (product of Example 3).
2. SPS, sucrose palmitate stearate.
3. SDS, sodium dodecyl sulphate.
4. Epikuron® 145 V
5. Epikuron® 170
6. Epikuron® 200

Results and discussion

The solution of the acetone-insoluble fraction of the IPA/MeOH extract of oats gave %FE values initially of about 300% declining with time to steady level of about 250% after 30 min (Table 3). Whilst the %FLS value of the SPS solutions was greater than that of the acetone-insoluble fraction of the IPA/MeOH extract of oats, the %FE was less. The SDS solutions showed very high initial foam expansions between 800 and 900% but the foam liquid stability was poor in comparison with the oat extract and SPS. The solutions of the three Epikurons showed very poor foaming properties.

Example 7 (Margarine)

Preparation of margarine samples

The following recipe was used for preparing 1 kg samples of margarine and is similar to one used in Riiner, Ü. (1971) Lebensm.-Wiss.u.Technol., 4, 175.

816 g fat blend
104 ml water
58 ml semi-skimmed milk
19 g salt
3 g emulsifier

The fat blend was composed mainly of sunflower and soya bean oils. The aqueous phase containing water, semi-skimmed milk and emulsifier, if water-soluble, was prepared at 50°C using an Ultra-Turrax® high shear mixer at $^2/_3$ maximum speed for 1 min. The pH was between 6.5 and 7.0. If the emulsifier was fat-soluble, it was dissolved in the fat blend after melting at 50°C. The molten fat blend was then added to the aqueous phase at 50°C and mixed with the high shear mixer at $^2/_3$ maximum speed for 5 min. The resulting emulsion was then cooled under vigorous agitation in a tempering vessel using water temperature control in order to crystallise some of the fat. The minimum water temperature was 15°C and the minimum margarine temperature was generally ca. 16°C, and this was achieved in approximately 16 min. The total cooling time was approximately 20 min. The finished margarines were then stored in sealed plastic cartons at ambient temperature.

The emulsifiers used in margarine preparation were:
1. IPA/MeOH extract of oats (product of Example 2).
2. Acetone-insoluble fraction of the IPA/MeOH extract of oats (product of Example 3).
3. IPA extract of oats (product of Example 1).
4. Acidan® N12 (Grinstead Products Ltd), citric acid esters of monoglycerides.
5. Epikuron® 200.
6. Admul® WOL.
7. Yolkin® 80 (Aarhus Oliefabrik A/S, Denmark), ammonium salts of phosphatidic acids.
8. SN

A control without added emulsifier was also prepared. The incorporation of the IPA extract of oats into margarine was at 10.2 g rather than 3 g in order to increase the concentration of active components to that in the IPA/MeOH extract. In this case, the weight of fat blend was reduced to 808.8 g to compensate for the extra emulsifier. All the emulsifiers were pre-dissolved in the fat blend with the exception of emulsifiers 2 and 4 which were pre-dissolved in the aqueous phase. A second margarine sample containing the IPA/MeOH extract of oats was subsequently prepared without including salt in the recipe.

Anti-spattering test

The anti-spattering properties of the emulsifiers in the margarine samples was assessed using a method similar to that described in Madsen, J. (1987) Fat Science and Technology, 4, 165. A commercial sample of FLORA® was also tested.

A domestic PTFE-coated frying pan (22 cm diameter) was pre-heated on an electric hot plate so that the temperature on the flat internal surface was 170°C. A weighed sample (40 g) of margarine was introduced from a plastic kitchen spatula and a sheet of paper was placed over the top of the pan for a period of 1 min. The anti-spattering properties of the emulsifiers were assessed by the coverage of fat on the paper. These tests were performed in duplicate.

Results and discussion

Studies using light microscopy determined the size of water droplets and their average size and values of the fat crystal aggregate size (Table 4). The IPA/MeOH extract of oats gave a margarine with the smallest water droplet size, 2-5 μm, and the smallest fat crystal aggregate size, 10μm, (except for FLORA® in which no fat crystals were identifed). In the salt-free margarine prepared with this extract, these sizes were only marginally increased to 2-20 μm, respectively. The control containing no added emulsifier, had water droplets of 5-20 μm in size and fat crystal aggregates of 35 μm. These results, similar to those in the emulsion test (Example 4), demonstrate the excellent emulsifying properties of the IPA/MeOH extract for producing water-in-oil emulsions.

The margarines containing Acidan®, Epikuron® 200 and Admul® WOL also showed small water droplet and fat crystal aggregate sizes. Acidan gave similar water droplet sizes to those in FLORA®. On the other hand, the effects of the IPA oat extract, at both 3 g and 10.2 g, Yolkin® 80 and SN were distinguished by generally larger water droplet sizes.

In the anti-spattering test, the prepared margarines containing the IPA/MeOH extract of oats, the acetone-insoluble fraction of the IPA/MeOH extract, the IPA extract of oats at elevated concentration (i.e. 10.2 g) and Epikuron® 200 displayed very little or no spattering. These margarines were at least comparable with and often better than the commercial sample of FLORA® margarine. The IPA/MeOH extract of oats, in particular, gave complete suppression of spattering when the salt, which has anti-spattering properties itself, was omitted from the recipe. In contrast, the anti-spattering properties of Admul® WOL and Yolkin® 80 were very poor (comparable with the surfactant-free control) whilst Acidan®, the reformed IPA extract of oats at the standard weight (3 g) and SN were intermediate.

Table 1

| Classification of emulsifiers in the emulsion test | |
|---|---|
| 1. Promoters of water-in-oil emulsions | Emulsifier Pre-dissolved in (O = oil, W = water) |
| IPA/MeOH extract of oats<br>Acetone-insoluble fraction of IPA/MeOH extract of oats<br>Admul® WOL<br>YN<br>Epikuron® 200 | O<br>O<br>O<br>O<br>W |
| 2. Promoters of oil-in-water emulsions | |
| Acetone-insoluble fraction of IPA/MeOH extract of oats<br>SPS, sucrose palmitate stearate<br>Epikuron® 145 V<br>Epikuron® 170 | W<br>W<br>W<br>W |
| 3. Poor emulsifiers | |
| IPA extract of oats<br>SN<br>Acetone-insoluble fraction of SN<br>Epikuron® 145V<br>Epikuron® 170<br>Epikuron® 200 | O<br>O<br>O or W<br>O<br>O<br>O |

Table 2

| Percentage increase in specific volume of loaves of bread containing emulsifiers. | |
|---|---|
| | % |
| Control | O |
| IPA/MeOH extract of oats | 9.4 |
| IPA extract of oats | 5.5 |
| Acetone-insoluble fraction of IPA/MeOH extract of oats | 5.4 |
| Artodan® SP 55 | 11.7 |
| Dimodan® PV | -3.9 |
| Panodan® 10V | 12.6 |
| Triodan® 55 | 6.1 |

Table 3

| Analysis of foaming properties | | | |
|---|---|---|---|
| Surfactant | %FE | | %FLS 30 min |
| | 5 min | 30 min | |
| Acetone-insoluble fraction of the IPA/MeOH extract of oats | 301 | 246 | 4 |
| SPS | 202 | 165 | 9 |
| SDS | 858 | 595 | 3 |
| Epikuron® 145V | 8 | 4 | 4 |
| Epikuron® 170 | 18 | 10 | 0.4 |
| Epikuron® 200 | 7 | 5 | 0.8 |

Table 4

| Structural evaluation of margarines | | | |
|---|---|---|---|
| Emulsifier | Water droplet size ($\mu$m) | Average water droplet size ($\mu$m) | Fat crystal aggregate size ($\mu$m) |
| None | 5-20 | <15 | 35 |
| IPA/MeOH extract of oats | 2-5 | <5 | 10 |
| IPA/MeOH extract of oats (no salt) | 2-20 | <5 | 10-20 |
| Acetone-insoluble fraction of IPA/MeOH extract of oats | 2-15 | <5 | 35 |
| IPA extract of oats | 5-15 | <10 | 25 |
| IPA extract (10.2 g) | 5-35 | <15 | 10-20 |
| Acidan® | 2-10 | <5 | 25 |
| Epikuron® 200 | 2-25 | <10 | 25 |
| Admul® WOL | 2-25 | <5 | 25 |
| Yolkin® 80 | 5-25 | <10 | 25 |
| SN | 5-50 | <10 | 25 |
| FLORA® | 2-7.5 | 5 | 0 |

## Claims

1. A process for the preparation of a surfactant comprising the step of extracting oats using an aliphatic alcohol to produce an alcohol extract characterised in that (a) the aliphatic alcohol is ethanol or isopropanol, (b) the alcohol extract is extracted with methanol to produce a methanol extract, (c) the methanol extract is extracted with acetone, and (d) the acetone-insoluble material is recovered.

2. A process as claimed in claim 1, wherein the extraction with acetone is effected by repeatedly washing the methanol extract with acetone.

3. A process as claimed in claim 1 or 2, wherein the acetone-insoluble material after recovery is dried.

4. The use of a surfactant prepared by a process as claimed in any preceding claim, (a) as an emulsifying agent and/or stabilizer in water-in-oil emulsions or oil-in-water emulsions, or (b) as a surfactant in bread making, or (c) as a surfactant in the formation and stabilization of aqueous foams, or (d) as an emulsifier in margarine.

## Patentansprüche

1. Verfahren zur Herstellung einer oberflächenaktiven Substanz, mit dem Schritt der Extraktion von Hafer mit einem aliphatischen Alkohol zur Herstellung eines Alkoholauszugs, dadurch gekennzeichnet, daß (a) der aliphatische Alkohol Ethanol oder Isopropanol ist, (b) der Alkoholauszug mit Methanol extrahiert wird, um einen Methanolauszug herzustellen, (c) der Methanolauszug mit Aceton extrahiert wird und (d) das acetonunlösliche Material zurückgewonnen wird.

2. Verfahren nach Anspruch 1, wobei die Extraktion mit Aceton durch wiederholtes Waschen des Methanolauszugs mit Aceton erfolgt.

3. Verfahren nach Anspruch 1 oder 2, wobei das acetonunlösliche Material nach der Rückgewinnung getrocknet wird.

4. Verwendung einer oberflächenaktiven Substanz, die durch ein Verfahren nach irgendeinem der vorstehenden Ansprüche hergestellt wird, (a) als Emulgator und/oder Stabilisator in Wasser-in-Öl-Emulsionen oder in Öl-in-Wasser-Emulsionen, oder (b) als oberflächenaktive Substanz (Netzmittel) bei der Brotherstellung, oder (c) als oberflächenaktive Substanz bei der Bildung und Stabilisierung wäßriger Schäume, oder (d) als Emulgator in Margarine.

**Revendications**

1. Procédé pour la préparation d'un agent tensioactif comprenant l'étape d'extraction d'avoine au moyen d'un alcool aliphatique pour produire un extrait alcoolique, caractérisé en ce que (a) l'alcool aliphatique est l'éthanol ou l'isopropanol, (b) l'extrait alcoolique est extrait avec du méthanol pour produire un extrait méthanolique, (c) l'extrait méthanolique est extrait avec de l'acétone, et (d) la matière insoluble dans l'acétone est recueillie.

2. Procédé tel que revendiqué dans la revendication 1, dans lequel l'extraction avec l'acétone est effectuée par lavages répétés de l'extrait méthanolique avec de l'acétone.

3. Procédé tel que revendiqué dans la revendication 1 ou 2, dans lequel on sèche la matière insoluble dans l'acétone après la récupération.

4. Utilisation d'un agent tensioactif préparé par un procédé tel que revendiqué dans l'une quelconque des revendications précédentes, (a) comme agent émulsifiant et/ou stabilisant dans des émulsions eau-dans-huile ou huile-dans-eau, ou (b) comme agent tensioactif dans la fabrication du pain, ou (c) comme agent tensioactif dans la formation et la stabilisation de mousses aqueuses, ou (d) comme émulsifiant dans de la margarine.